Europäisches Patentamt

European Patent Office

Office européen des brevets

(11) Veröffentlichungsnummer: **0 119 568**
**B1**

(12) # EUROPÄISCHE PATENTSCHRIFT

(45) Veröffentlichungstag der Patentschrift:
08.02.89

(51) Int. Cl.⁴: **G 11 B 15/08**

(21) Anmeldenummer: **84102636.2**

(22) Anmeldetag: **10.03.84**

(54) Optoelektronische Bandendabschaltung.

(30) Priorität: 19.03.83 DE 3309993
31.01.84 DE 3403216

(43) Veröffentlichungstag der Anmeldung:
26.09.84 Patentblatt 84/39

(45) Bekanntmachung des Hinweises auf die Patenterteilung:
08.02.89 Patentblatt 89/6

(84) Benannte Vertragsstaaten:
AT BE CH DE FR GB IT LI

(56) Entgegenhaltungen:
IBM TECHNICAL DISCLOSURE BULLETIN, Band 23, Nr.
11, April 1981, Seiten 5164-5166, New York, US; L.D.
RICHARDS: "Self-adjusting end of tape/beginning of
tape optical transducer detection circuit"
PATENTS ABSTRACTS OF JAPAN, Band 5, Nr. 36
(P-51)[708], 7. März 1981; & JP-A-55 157 138
PATENTS ABSTRACTS OF JAPAN, Band 8, Nr. 252
(P-314)[1689], 17. November 1984; & JP-A-59 121 640

(73) Patentinhaber: GRUNDIG E.M.V. Elektro-Mechanische
Versuchsanstalt Max Grundig holländ. Stiftung & Co.
KG., Kurgartenstrasse 37, D-8510 Fürth/Bay. (DE)

(72) Erfinder: Schuelein, Reinhard, Humboldtstrasse 6,
D-8502 Zirndorf (DE)

(74) Vertreter: Kolb, Max et al, Kurgartenstrasse 37,
D-8510 Fuerth/Bayern (DE)

## Beschreibung

Die Erfindung betrifft eine Bandenabschaltung für ein Video-, Audio- oder Datenaufzeichnungs- und/oder -wiedergabegerät der im Oberbegriff des Anspruchs 1 angegebenen Art.

Eine bekannte Anordnung zur Abtastung von reflektierenden Marken auf bewegten Aufzeichnungsträgern arbeitet mit zwei dicht nebeneinanderliegenden Photodioden, aus deren Ausgangssignalspannungen eine Differenzspannung gebildet wird. Die weitere Auswertung dieser Differenzspannung erfolgt mittels eines nachgeschalteten Schmitt-Triggers, dessen Einschalt- bzw. Abschaltschwellwert geeignet eingestellt und abgeglichen werden kann (DE-PS 22 37 811).

Weiterhin ist eine Anordnung zur optoelektronischen Bandendabschaltung bekannt, die im wesentlichen aus zwei in Reihe geschalteten Fototransistoren zur Erkennung der am Anfang und am Ende des Aufzeichnungsträgers angebrachten Schaltfolien, einer nachgeschalteten Komparatorschaltung und einem Mikrocomputer zur Auswertung der Komparatorausgangssignale besteht. Der Abgleich der Schaltschwellen, welche symmetrisch zu einer von den Reflexionseigenschaften des Aufzeichnungsträgers und den Toleranzen der Fototransistoren abhängigen Ruhespannung liegen sollen, erfolgt manuell mit Hilfe eines Trimmwiderstandes (Grundig Technische Informationen 1980, Heft 3, Seite 126, und Grundig Technische Informationen 1981, Heft 3, Seite 136).

Der Nachteil der bekannten Schaltungsanordnung liegt im genannten manuellen Abgleich der jeweiligen Schwellwertschalter. Dieser Abgleich ist notwendig, um zum einen mögliche Unsymmetrien der Schaltspannungen bezüglich der Ruhespannung, hervorgerufen durch Toleranzen der elektrischen und optischen Eigenschaften der verwendeten Optokoppler, auszugleichen und zum anderen zu verhindern, dass, ausgelöst durch Reflexionsunterschiede bei verschiedenem Bandmaterial, die entweder rein materialspezifischer Art oder auch alterungsbedingt sein können, ein Überschreiten der Schwellwerte erfolgt und damit der Bandtransport unerwünscht unterbrochen wird.

Ferner sind optoelektronische Bandenabschaltungen bekannt, die nicht die Reflexions-, sondern die Transmissionseigenschaften bestimmter Schaltfolien ausnutzen. Grundsätzlich liegt auch bei diesen Schaltungen der Nachteil im manuellen Abgleich der Anspruchschwelle. Zwar ist hier die Einstellung der Schwelle weniger kritisch, da die Unterschiede in der Transparenz des Aufzeichnungsträgers und der Schaltfolie bei dem bisher verfügbaren Bandmaterial relativ gross sind. Jedoch zielen die Entwicklungen und Herstellungsverfahren neuer bandförmiger Aufzeichnungsträger darauf hin, die Aufzeichnungsdichte wirksam zu vergrössern. Dies gelingt nur dann, wenn nicht nur die Dicke des im unbeschichteten Zustand transparenten Trägermaterials, sondern auch die Dicke der darauf aufzubringenden magnetischen Schicht, beispielsweise durch geeignete Bedampfungsverfahren, wesentlich vermindert wird. Damit steigt aber der Transmissionsgrad des von der optoelektronischen Einrichtung beleuchteten Aufzeichnungsträgers, so dass eine einmalige manuelle Einstellung der erforderlichen Schaltschwelle im Hinblick auf das verwendbare Bandmaterial kritischer wird. Sollen ausserdem optoelektronische Einrichtungen eingesetzt werden, die nicht im sichtbaren, sondern z.B. im infraroten Bereich des Lichtes arbeiten, so ist zu berücksichtigen, dass Bandmaterialien, die im sichtbaren Frequenzbereich einen kleinen Transmissionsgrad aufweisen, im Infrarotbereich durchaus einen wesentlich höheren Transmissionsgrad besitzen können.

Der Erfindung liegt daher die Aufgabe zugrunde, bei einer optoelektronischen Bandendabschaltung der im Oberbegriff des Anspruchs 1 angegebenen Art Massnahmen vorzusehen, durch die der Abgleich der Schaltschwellen hinsichtlich der Toleranzen der optischen Bauelemente und der optischen Eigenschaften des Bandmaterials automatisch erfolgt und optimiert wird, und der manuelle Abgleich entfallen kann.

Diese Aufgabe wird durch die im kennzeichnenden Teil des Anspruchs 1 angegebenen Markmale gelöst. Vorteilhafte Weiterbildungen der Erfindung sind in den Unteransprüchen gekennzeichnet.

Die optoelektronische Bandendabschaltung gemäss der Erfindung ermöglicht es, die Schaltschwellen zur Steuerung des Bandtransports adaptiv automatisch so abzugleichen, dass auch bei der Verwendung von Bandmaterial mit unterschiedlichen optischen Eigenschaften ein sicheres Erkennen von Bandanfangs- und -endbereichen gewährleistet wird. In vorteilhafter Weise ist die Schaltung gemäss der Erfindung bei entsprechender Anordnung der optoelektronischen Einrichtung sowohl auf Systeme mit transparenten, als auch auf Systeme mit reflektierenden Schaltfolien anwendbar.

Ausführungsbeispiele der Erfindung sind im folgenden anhand von Zeichnungen näher erläutert. Es zeigen:

Fig. 1 Grundschaltung einer optoelektronischen Bandendabschaltung mit einem Optokoppler, einem Schwellwertschalter und einem Digital-Analog-Converter zum automatischen Abgleich der Schaltschwelle,

Fig. 2 eine optoelektronische Bandendabschaltung mit zwei Optokopplern, einem Schwellwertschalter und einem Digital-Analog-Converter zum automatischen Abgleich der Schaltschwelle,

Fig. eine optoelektronsiche Bandendabschaltung mit zwei Optokopplern, zwei Schwellwertschaltern und einem Digital-Analog-Converter zum automatischen Abgleich der Schaltschwellen,

Fig. 4 eine optoelektronische Bandendabschaltung mit zwei Optokopplern, zwei Schwellwertschaltern und zwei Digital-Abnalog-Convertern zum automatischen Abgleich der Schaltschwellen.

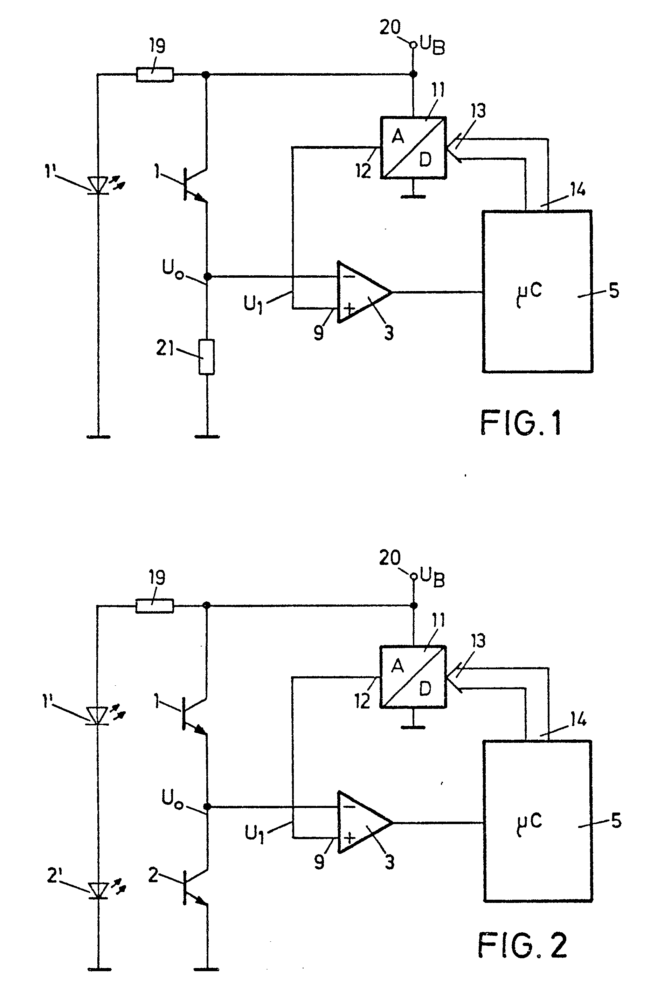

Figur 1 zeigt die Grundschaltung einer optoelektronischen Bandendabschaltung gemäss der Erfindung. Zur Erkennung der vom Aufzeichnungsbereich sich optisch unterscheidenden Bandanfangs- und -endbereiche des Aufzeichnungsträgers ist ein Optokoppler 1', 1 vorgesehen. Hierbei ist eine Leuchtdiode 1' mit ihrer Anode über einen Widerstand 19 an den positiven Pol und mit ihrer Kathode an den negativen Pol einer Spannungsquelle 20 angeschlossen. Als lichtelektrischer Empfänger wird ein Fototransistor 1 verwendet, dessen Kollektor zum positiven Pol der Spannungsquelle 20 und dessen Emitter zum invertierenden Eingang eines nicht gegengekoppelten Operationsverstärkers 3 sowie über einen Widerstand 21 an den negativen Pol der Spannungsquelle 20 führt. Der Operationsverstärker hat wegen der fehlenden Gegenkopplung die Funktion eines Komparators (Schwellwertschalter). Während der nicht invertierende Eingang des Komparators 3 mit dem Analogausgang 12 eines Digital-Analog-Converters (DAC) 11 in Verbindung steht, ist sein Ausgang an den Steuereingang eines Mikrocomputers 5 gelegt, der die Signalauswertung übernimmt. Zur Steuerung des automatischen Abgleichvorganges der Schaltschwelle ist der Steuerausgang 14 des Mikrocomputers 5 an den Digitaleingang 13 des DAC 11 angeschlossen.

Mit einer derartigen Schaltungsanordnung ist es möglich, einen automatischen und optimalen Ablgeich der Schaltschwelle in einer optoelektronischen Bandendabschaltung so durchzuführen, dass dadurch ein sicheres Erkennen von Bandanfang und Bandende erreicht wird. Im Ruhezustand der Schaltungsanordnung befindet sich keine der beiden optisch zu erkennenden Schaltfolien im Abtastbereich des Optokopplers und es fliesst im Kollektor-Emitter-Zweig des Fototransistors ein Ruhestrom. Folglich liegt am invertierenden Eingang des Komparators 3 eine Ruhespannung $U_0$. Dies hängt im wesentlichen von den optischen Eigenschaften des Bandes und den optoelektronischen Eigenschaften des Optokopplers (Toleranzen) ab. Die Schaltschwelle $U_1$ soll nun abhängig von den optischen Eigenschaften des Bandes und den Toleranzen des Optokopplers immer im optimalen Abstand zur Ruhespannung $U_0$ liegen, um ein unerwünschtes Schalten des Komparators in Bandmitte zu verhindern, bzw. ein sicheres Ansprechen des Komparators am Bandanfang und Bandende zu ermöglichen, was nicht gewährleistet ist, wenn die Schaltschwelle sehr nahe bei $U_0$ liegt, oder zu weit von $U_0$ entfernt ist. Beim Abgleichvorgang bestimmt der Mikrocomputer 5 zunächst die Ruhespannung $U_0$, indem er über den Digital-Analog-Converter 11 an dessen Ausgang eine veränderliche, ansteigende oder abfallende Spannung erzeugt, die genau dann mit der Ruhespannung $U_0$ übereinstimmt, wenn das Ausgangssignal des Komparators 3 von «Low» auf «High» oder von «High» auf «Low» springt. Mit Hilfe des registrierten Spannungswertes $U_0$ bestimmt der Mikrocomputer 5 die Schaltschwelle $U_0$ so, dass der Komparator 3 sicher schaltet, wenn die optisch zu erkennenden Schaltfolien des Bandes in den Abtastbereich des Optokopplers einlaufen. Andererseits wählt er den Abstand der Schaltschwelle $U_1$ zu der Ruhespannung $U_0$ so gross, dass der Bandtransport bei Schwankungen der Ruhespannung $U_0$, zum Beispiel hervorgerufen durch wechselnde optische Eigenschaften des Bandmaterials, nicht unerwünscht unterbrochen wird. Dadurch ist ein optimaler adaptiver automatischer Abgleich der optoelektronischen Bandendabschaltung gewährleistet. Dieser Abgleich wird nach jedem Einlegen eines Bandes in das Aufzeichnungsgerät erneut durchgeführt und auch während des Banddurchlaufs ständig vom Mikrocomputer 5 kontrolliert.

Die Figur 2 zeigt ein Ausführungsbeispiel der Erfindung, das im wesentlichen mit der Grundschaltung nach Fig. 1 übereinstimmt. Der einzige Unterschied besteht darin, dass bei der Anordnung gemäss Fig. 2 anstelle eines Optokopplers zwei elektrisch in Reihe geschaltete Optokoppler 1', 1 und 2', 2 zur Unterscheidung von Bandanfang und Bandende verwendet werden. Falls sich dabei die Schaltfolien jeweils über die gesamte Breite des Aufzeichnungsträgers erstrecken, wie dies z.B. bei Systemen, die mit Transparentfolien arbeiten, der Fall ist, so müssen die Optokoppler gegeneinander in Bandlaufrichtung versetzt angeordnet werden. Damit wird erreicht, dass die Schaltfolien jeweils nur in den Abtastbereich eines, dem Anfang oder dem Ende des Bandes entsprechenden Optokopplers einlaufen und den Schaltvorgang auslösen, bevor sie in den Abtastbereich des jeweils anderen Optokopplers gelangen. Da sich beide Optokoppler aufgrund ihrer Anordnung über ihre Sende-/Empfangsbereiche gegenseitig nicht beeinflussen, genügt es, beide an eine einzige automatisch abzugleichende Schaltschwelle (gleicher Schwellwertschalter) zu legen.

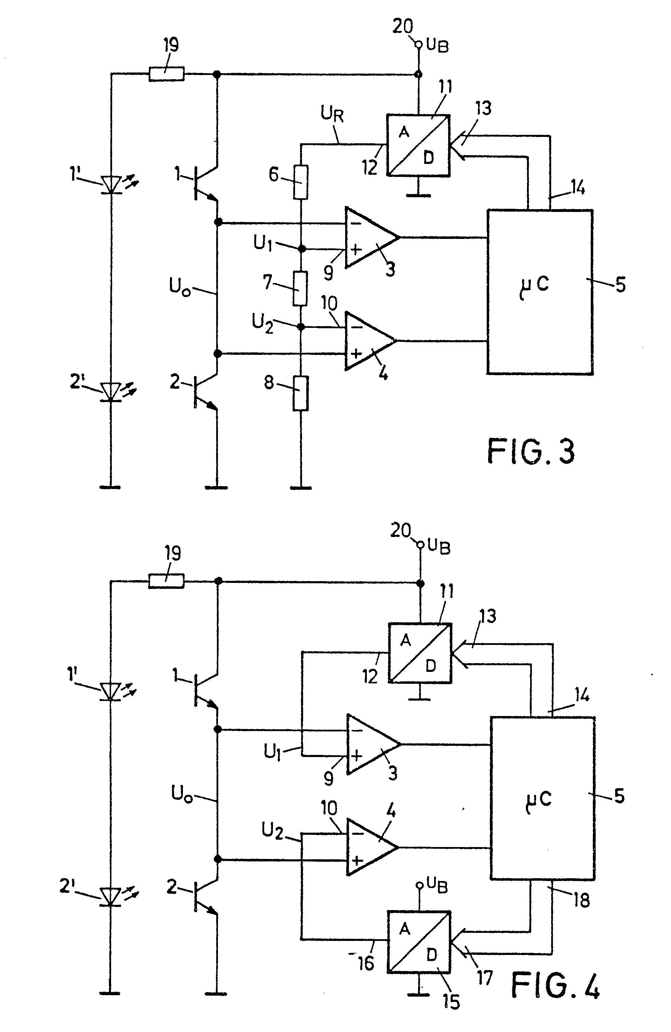

Sind dagegen die Schaltfolien am Anfang beziehungsweise am Ende des Bandes jeweils auf der oberen bzw. unteren Hälfte des Bandes und die Optokoppler senkrecht zur Bandlaufrichtung übereinander angeordnet, dann ist es von Vorteil, jedem der beiden Optokoppler eine eigene Schaltschwelle zuzuordnen, um eine gegenseitige Beeinflussung über ihre Sende-/Empfangsbereiche zu vermeiden. Entsprechende Schaltungsbeispiele hierzu sind in den Figuren 3 und 4 dargestellt.

In der Schaltung gemäss Fig. 3 ist eine Leuchtdiode 1' über einen Widerstand 19 an den positiven Pol einer Spannungsquelle 20 angeschlossen. Die Kathode der Leuchtdiode 1' ist mit der Anode einer zweiten Leuchtdiode 2' verbunden, deren Kathode am negativen Pol der Spannungsquelle 20 liegt. Als lichtelektrische Empfänger werden auch hier zwei Fototransistoren 1, 2 verwendet, von denen der Kollektor des Fototransistors 1 zum positiven Pol und der Emitter des Fototransistors 2 zum negativen Pol der Spannungsquelle 20 führt. Der Emitter des Fototransistors 1 ist an den Kollektor des Fototransistors 2 gelegt. An diesen Verbindungspunkt der in Reihe geschalteten Fototransistoren 1, 2 sind der invertierende Eingang eines nicht gegengekoppelten Operationsverstärkers 3 und der nicht invertierende Eingang eines nicht gegengekoppelten Operationsverstärkers 4 angeschlossen. Beide Operationsverstärker haben wegen der fehlenden Gegenkopplung die Funktion eines Komparators (Schwellwertschalters). Zwischen dem nicht invertierenden Eingang des Operationsverstärkers 3 und dem invertierenden Eingang des Operationsverstärkers 4 befindet sich ein Widerstand 7. Ausserdem liegt der invertierende Eingang des Operationsverstärkers 4 über einen Widerstand 8 am negativen Pol der Spannungsquelle 20. Die Ausgänge der beiden Komparatoren 3, 4 führen zu einem Mikrocomputer 5, der die Signalauswertung übernimmt. Zur Steuerung eines automatischen Abgleichvorganges der Schaltschwellen ist ein Digital-Analog-Converter 11 mit dem Digital-Eingang 13 an einen Steuerausgang 14 des Mikrocomputers 5 angeschlossen. Der Analogausgang 12 des Digital-Analog-Cenverters 11 führt über einen Widerstand 6 an den nicht invertierenden Eingang des Operationsverstärkers 3.

Die Unterscheidung von Bandanfang und Bandende geschieht mit Hilfe der beiden Optokoppler 1', 1 und 2', 2, welche im Aufzeichnungsgerät senkrecht zur Bandlaufrichtung übereinander so montiert sind, dass der eine die obere Hälfte und der andere die untere Hälfte des Aufzeichnungsträgers abtastet. Die Reflexionsfolien am Anfang bzw. am Ende des Bandes sind jeweils auf der oberen bzw. unteren Hälfte des Bandes angebracht. Im Ruhezustand der Schaltungsanordnung befindet sich keine der beiden Reflexionsfolien im Abtastbereich der Optokoppler und es fliesst in den Kollektor-Emitter-Zweigen der Fototransistoren 1, 2 ein Ruhestrom. Folglich liegt am Verbindungspunkt der beiden Fototransistoren und damit am invertierenden Eingang des Komparators 3 und am nicht invertierenden Eingang des Komparators 4 eine Ruhespannung $U_0$. Diese hängt im wesentlichen von den Reflexionseigenschaften des Bandes und den optoelektronischen Eigenschaften der beiden Optokoppler (Toleranzen) ab. Die untere Schaltschwelle $U_2$ und die obere Schaltschwelle $U_1$ sollen nun symmetrisch zur Ruhespannung $U_0$ liegen, um ein unerwünschtes Schalten der Komparatoren in Bandmitte zu verhindern, bzw. ein sicheres Ansprechen der Komparatoren am Bandanfang und Bandende zu ermöglichen, was nicht gewährleistet ist, wenn eine der Schaltschwellen sehr nahe bei $U_0$ liegt, während die andere zu weit von $U_0$ entfernt ist. Für den automatischen Abgleich, der jeweils nach Einlegen eines neuen Bandes in das Aufzeichnungsgerät erfolgt, aber auch während des Aufnahme- oder Wiedergabebetriebes kontrolliert werden kann, sorgt der Digital-Analog-Cenverter 11 in Verbindung mit dem Mikrocomputer 5. Dazu erzeugt der Mikrocomputer über den Digital-Analog-Converter 11 am Analogausgang 12 eine veränderliche, zum Beispiel ansteigende Referenzspannung $U_R$. Über den Spannungsteiler 6, 7, 8 werden damit die Schaltschwellen $U_1$ und $U_2$ an den Eingängen 9, 10 der Komparatoren 3, 4 variiert. Erreicht bzw. übersteigt bei diesem Abgleichvorgang die Schaltschwelle $U_1$ die Ruhespannung $U_0$, dann schaltet der Komparator 3 seinen einem logischen Wert zugeordneten Ausgangspegel von «Low» auf «High». Dies wird von dem Mikrocomputer 5 registriert und die im Umschaltzeitpunkt anliegende Referenzspannung $U_R$ wird digital abgespeichert. Mit Hilfe des bekannten Widerstandsnetzwerkes 6, 7, 8 bestimmt der Mikrocomputer 5 dann die Ruhespannung $U_0$ und die Referenzspannung $U_R$, die am Widerstand 6 anzulegen ist, damit die Schaltschwellen $U_1$ und $U_2$ symmetrisch zur Ruhespannung $U_0$ liegen. Dieser ermittelte Wert wird digital abgespeichert und über den Analogausgang 12 des Digital-Analog-Converters 11 an das Widerstandsnetzwerk 6, 7, 8 geführt. Damit ist ein optimaler automatischer Abgleich der Schaltschwellen gewährleistet. Läuft jetzt der Anfang oder das Ende des Bandes mit der reflektierenden Schicht in den Abtastbereich des entsprechenden Optokopplers, dann über- oder unterschreitet die Spannung $U_0$ am invertierenden Eingang des Komparators 3 oder am nicht invertierenden Eingang des Komparators 4 die Schaltschwelle $U_1$ oder $U_2$. Daraufhin schaltet der entsprechende Komparator seinen einem logischen Wert zugeordneten Ausgangspegel von «High» auf «Low» und gibt den damit verbundenen Steuerbefehl zur Abschaltung des Bandtransportes und zur Anzeige, ob es sich um den Bandanfang oder das Bandende handelt, an den Mikrocomputer weiter. Nach der erfolgten Endabschaltung läuft, gesteuert durch den Mikrocomputer, das Band wieder soweit vor oder zurück, dass sich die Schaltfolie des Bandanfanges oder des Bandendes nicht mehr im Abtastbereich des entsprechenden Optokopplers befindet. Damt ist sichergestellt, dass auch bei erneutem Einlegen des Bandes in das Aufzeichnungsgerät die Schaltschwellen bezüglich der Ruhespannung $U_0$ richtig eingestellt werden, da der automatische Abgleich nur durchgeführt und kontrolliert werden darf, wenn die Schaltfolien ausserhalb des Abtastbereichs der Optokoppler liegen. Andernfalls würde sich eine Fehleinstellung ergeben.

Fig. 4 zeigt ein weiteres Ausführungsbeispiel der Erfindung. Es unterscheidet sich von dem vorhergehenden Ausführungsbeispiel durch den Wegfall des Spannungsteilers 6, 7, 8 und durch die Verwendung eines weiteren Digital-Analog-Converters 15. Der Analog-Ausgang 12 des Digital-Analog-Converters 11 ist bei dieser Schaltungsanordnung direkt an den nicht invertierenden Eingang des Komparators 3 angeschlossen. Zwischen einen zweiten Ausgang 18 des Mikrocomputers 5 und dem invertierenden Eingang des Komparators 4 liegt der zweite Digital-Analog-Converter 15. Damit werden die beiden Schaltschwellen nicht wie im ersten Ausführungsbeispiel durch einen am Mikrocomputer 5 liegenden Digital-Analog-Converter und den damit verbundenen Spannungsteiler 6, 7, 8, sondern über zwei getrennt am Mikrocomputer 5 angeschlossene Digital-Analog-Converter bestimmt. Der Vorteil dieser Anordnung besteht dann darin, dass auch die Fensterbreite $U_1-U_2$ der Schaltschwellen einstellbar ist. Der Abgleichvorgang erfolgt dabei so, dass, wie auch im ersten Ausführungsbeispiel beschrieben, zunächst nach Einlegen eines Bandes die Ruhespannung $U_0$ ermittelt wird. Zu diesem Zweck genügt es, wenn der Mikrocomputer 5 über einen der beiden Digital-Analog-Converter an deren Ausgang eine veränderliche, ansteigende oder abfallende Spannung erzeugt, die genau dann mit der Ruhespannung $U_0$ übereinstimmt, wenn das Ausgangssignal des an dem betreffenden Digital-Analog-Converter angeschlossenen Komparators von «High» auf «Low» oder von «Low» auf «High» springt. Mit Hilfe des registrierten Spannungswertes $U_0$ bestimmt der Mikrocomputer 5 die beiden dazu symmetrisch liegenden Schaltschwellen $U_1$ und $U_2$, die dann über die beiden Digital-Analog-Converter 11 und 15 an die entsprechenden Eingänge der Komparatoren 3 und 4 gelegt werden. Die Fensterbreite $U_1-U_2$ wird so eingestellt, dass mögliche Schwankungen der Ruhespannung $U_0$, die z.B. durch nicht immer gleichmässige Reflexionseigenschaften der oberen und unteren Hälfte des Bandes während des Banddurchlaufs entstehen können, innerhalb dieser Fensterbreite bleiben. Damit ist ein optimaler automatischer Abgleich der optoelektronischen Bandendabschaltung gewährleistet, bei dem ein sicheres Erkennen von Bandanfang und Bandende möglich ist.

**Patentansprüche**

1. Bandendabschaltung für ein Video-, Audio- oder Datenaufzeichnungs- und/oder -wiedergabegerät mit einer optoelektronischen Einrichtung zur Erkennung von Bandanfangs- und -endbereichen eines Aufzeichnungsträgers, mit einer an die optoelektronische Einrichtung angeschlossenen Schwellwertschaltung, die bei Überschreiten von festgelegten Eingangsschwellwerten ihre Ausgangspegel ändert, ferner mit einem Mikrocomputer, der die von der Schwellwertschaltung kommenden Signale verarbeitet und an die den Bandtransport steuernde Motorelektronik weiterleitet, dadurch gekennnzeichnet, dass der oder die die Schwellwerte bestimmenden Eingänge der Schwellwertschaltung mit einer über den Mikrocomputer steuerbaren Digital-Analog-Converteranordnung gekoppelt sind, über die der Mikrocomputer adaptiv automatisch die für eine fehlerfreie Erkennung der Bandanfangs- und -endbereiche erforderliche Lage der Schaltschwelle bzw. Schaltschwellen zur Ruhespannung der optoelektronischen Einrichtung einstellt.

2. Bandendabschaltung nach Anspruch 1, dadurch gekennzeichnet, dass die Schwellwertschaltung einen als Komparator (3) ausgebildeten Schwellwertschalter aufweist, und dass die Digital-Analog-Converteranordnung aus einem direkt mit dem nicht invertierenden Eingang (9) des Komparators (3) in Verbindung stehenden Digital-Analog-Converter (DAC) (11) besteht, über den der Mikrocomputer (5) automatisch den Abstand der Schaltschwelle ($U_1$) zur Ruhespannung ($U_0$) der optoelektronischen Einrichtung optimiert.

3. Bandendabschaltung nach Anspruch 1, dadurch gekennzeichnet, dass die Schwellwertschaltung zwei als Komparatoren (3, 4) ausgebildete Schwellwertschalter aufweist, und dass die Digital-Analog-Converteranordnung aus einem Digital-Analog-Converter (DAC) (11) sowie einem Widerstandsnetzwerk (6, 7, 8) besteht, das den nicht invertierenden Eingang (9) und den invertierenden Eingang (10) der Komparatoren (3) und (4) mit dem Ausgang (12) des DAC verbindet, über den der Mikrocomputer (5) automatisch die am Widerstandsnetzwerk liegende Referenzspannung ($U_R$) so einstellt, dass die Schaltschwellen ($U_1$) und ($U_2$) symmetrisch zur Ruhespannung ($U_0$) der optoelektronischen Einrichtung liegen.

4. Bandendabschaltung nach Anspruch 1, dadurch gekennzeichnet, dass die Schwellwertschaltung zwei als Komparatoren (3, 4) ausgebildete Schwellwertschalter aufweist, und dass die Digital-Analog-Converteranordnung aus einem Digital-Analog-Converter (DAC) (11), dessen Ausgang (12) an den nicht invertierenden Eingang (9) des ersten Komparators (3) geschaltet ist sowie aus einem Digital-Analog-Converter (DAC) (15) besteht, dessen Ausgang (16) an den invertierenden Eingang (10) des zweiten Komparators (4) angeschlossen ist, und dass der Mikrocomputer (5) über die beiden Digital-Analog-Converter die Schaltschwellen ($U_1$, $U_2$) mit einer vorgebbaren Fensterbreite so einstellt, dass sie symmetrisch zur Ruhespannung ($U_0$) der optoelektronischen Einrichtung liegen.

5. Bandendabschaltung nach Anspruch 1 oder 2, dadurch gekennzeichnet, dass die optoelektronische Einrichtung einen Optokoppler (1, 1') aufweist, der die volle Breite des Aufzeichnungsträgers erfasst.

6. Bandendabschaltung nach Anspruch 1 oder einem der Ansprüche 2 bis 4, dadurch gekennzeichnet, dass die optoelektronische Einrichtung zwei elektrisch in Reihe geschaltete Optokoppler (1, 1') und (2, 2') aufweist, die in Bandlaufrichtung gegeneinander versetzt angeordnet sind, und die beide die volle Breite des Aufzeichnungsträgers erfassen.

7. Bandendabschaltung nach Anspruch 1, 3 oder 4, dadurch gekennzeichnet, dass die optoelektronische Einrichtung zwei elektrisch in Reihe geschaltete Optokoppler (1, 1') und (2, 2') aufweist, die senkrecht zur Bandlaufrichtung nebeneinander angeordnet sind, und von denen einer die obere Hälfte und der andere die untere Hälfte der vollen Bandbreite des Aufzeichnungsträgers erfasst.

8. Bandendabschaltung nach einem oder mehreren der Ansprüche 1 bis 7, dadurch gekennzeichnet, dass Sender und Empfänger der optoelektronischen Einrichtung zur Erkennung von transparenten Bandanfangs- und -endbereichen einander gegenüberliegend an der Vorder- und Rückseite des Aufzeichnungsträgers angeordnet sind.

9. Bandendabschaltung nach einem oder mehreren der Ansprüche 1 bis 7, dadurch gekennzeichnet, dass Sender und Empfänger der optoelektronischen Einrichtung zur Erkennung von reflektierenden Bandanfangs- und -endbereichen in einem bestimmten Winkel an der gleichen Seite des Aufzeichnungsträgers angeordnet sind.

10. Bandendabschaltung nach einem oder mehreren der Ansprüche 1 bis 9, dadurch gekennzeichnet, dass der Mikrocomputer (5) die Schaltschwellen ($U_1$) und/oder ($U_2$) erst dann einstellt, wenn sich der optisch zu erkennende Bandanfangs- oder -endbereich des Aufzeichnungsträgers nicht im Sende-/Empfangsbereich der optoelektronischen Einrichtung befindet.

11. Bandendabschaltung nach Anspruch 10, dadurch gekennzeichnet, dass der Mikrocomputer (5) nach bereits erfolgter Bandendabschaltung den Bandtransport wieder in Gang setzt, und zwar solange, bis sich der optisch zu erkennende Bandanfangs- oder -endbereich des Aufzeichnungsträgers nicht mehr im Sende-/Empfangsbereich der optoelektronischen Einrichtung befindet.

12. Bandendabschaltung nach einem oder mehreren der Ansprüche 1 bis 11, dadurch gekennzeichnet, dass der Mikrocomputer (5) die Schaltschwellen ($U_1$) und/oder ($U_2$) nach jedem Einlegen eines Bandes in das Aufzeichnungs- und/oder Wiedergabegerät neu einstellt und während des Banddurchlaufs ständig kontrolliert.

## Claims

1. Tape end stop for a video, audio or data recording and/or playback unit having an optoelectronic device for detecting the beginning-of-tape and end-of-tape regions of a recording medium, having a threshold value circuit connected to the optoelectronic device, which circuit changes its output level when defined input threshold values are exceeded, furthermore having a microprocessor which processes the signals coming from the threshold value circuit and forwards them to the motor electronics controlling the tape transport, characterized in that the threshold-value determining input(s) of the threshold value circuit are coupled to a digital-analog converter arrangement which can be controlled via the microprocessor, by means of which digital-analog converter arrangement the microprocessor automatically sets in an adaptive manner the position, required for an error-free detection of the beginning-of-tape and end-of-tape regions, of the switching threshold or switching thresholds with respect to the rest voltage of the optoelectronic device.

2. Tape end stop according to Claim 1, characterized in that the threshold value circuit has a threshold value switch designed as a comparator (3), and in that the digital-analog converter arrangement is composed of a digital-analog converter (DAC) (11) which is directly connected to the non-inverting input (9) of the comparator (3), and by means of which the microprocessor (5) automatically optimizes the distance of the switching threshold ($U_1$) with respect to the rest voltage ($U_0$) of the optoelectronic device.

3. Tape end stop according to Claim 1, characterized in that the threshold value circuit has two threshold value switches designed as comparators (3, 4), and in that the digital-analog converter arrangement is composed of a digital-analog converter (DAC) (11) and a resistant network (6, 7, 8) which connects the non-inverting input (9) and the inverting input (10) of the comparators (3) and (4) to the output (12) of the DAC, by means of which the microprocessor (5) automatically sets the reference voltage ($U_R$) applied on the resistance network such that the switching thresholds ($U_1$) und ($U_2$) lie symmetrical with respect to the rest voltage ($U_0$) of the optoelectronic device.

4. Tape end stop according to Claim 1, characterized in that the threshold value circuit has two threshold value switches designed as comparators (3, 4), and in that the digital-analog converter arrangement is composed of a digital-analog converter (DAC) (11), the output (12) of which is connected to the non-inverting input (9) of the first comparator (3), as well as of a digital-analog converter (DAC) (15), the output (16) of which is connected to the inverting input (10) of the second comparator (4), and in that the microprocessor (5) sets the switching thresholds ($U_1$, $U_2$) via the two digital-analog converters with a predefinable window width such that they lie symmetrical with respect to the rest voltage ($U_0$) of the optoelectronic device.

5. Tape end stop according to Claim 1 or 2, characterized in that the optoelectronic device has an optoelectronic coupler (1, 1') which covers the full width of the recording medium.

6. Tape end stop according to Claim 1 or one of Claims 2 to 4, characterized in that the optoelectronic device has two optoelectronic couplers (1, 1') and (2, 2') connected symmetrically in series, which are arranged mutually offset in the tape running direction, and both of which cover the full width of the recording medium.

7. Tape end stop according to Claim 1, 3 or 4 characterized in that the optoelectronic device has two optoelectronic couplers (1, 1') and (2, 2') connected electrically in series which are arranged adjacent to one another perpendicular to the tape running direction, one of which covers the upper half and the other one of which covers the lower half of the full band width of the recording medium.

8. Tape end stop according to one or more of Claims 1 to 7, characterized in that the transmitter and receiver of the optoelectronic device for detecting transparent beginning-of-tape and end-of-tape regions are arranged mutually opposite on the front and rear side of the recording medium.

9. Tape end stop according to one or more of Claims 1 to 7, characterized in that the transmitter and receiver of the optoelectronic device for detecting reflecting beginning-of-tape and end-of-tape regions are arranged at a certain angle on the same side of the recording medium.

10. Tape end stop according to one or more of Claims 1 to 9, characterized in that the microprocessor (5) sets the switching thresholds ($U_1$) and/or ($U_2$) only when the beginning-of-tape or end-of-tape region, to be optically detected, of the recording medium is not located in the transmitting/receiving region of the optoelectronic device.

11. Tape end stop according to Claim 10, characterized in that the microprocessor (5), after completing the tape end stop, starts up the tape transport again, specifically until the beginning-of-tape or end-of-tape region, to be optically detected, of the recording medium is no longer located in the transmitting/receiving region of the optoelectronic device.

12. Tape end stop according to one or more of Claims 1 to 11, characterized in that the microprocessor (5) sets the switching thresholds ($U_1$) and/or ($U_2$) anew after each insertion of a tape into the recording and/or playback unit and continuously monitors said switching thresholds during tape running.

## Revendications

1. Circuit d'arrêt de fin de bande pour un appareil vidéo, audio ou d'enregistrement et/ou de lecture de données, comportant un dispositif optoélectronique pour identifier les zones de début et de fin de la bande d'un support d'enregistrement, comportant un circuit à valeurs de seuil raccordé au dispositif optoélectronique, dont le niveau de sortie varie lors du dépassement de valeurs de seuil d'entrée fixées, et en outre un micro-ordinateur, qui traite les signaux délivrés par le circuit à valeur de seuil et les retransmet au système électronique du moteur commandant l'entraînement de la bande, caractérisé par le fait que la ou les entrées, qui déterminent les valeurs de seuil, du circuit à valeurs de seuil sont accouplées à un dispositif à convertisseur numérique/analogique raccordé par le micro-ordinateur et à l'aide duquel le micro-ordinateur règle automatiquement de façon adaptative la position, nécessaire pour une identification parfaite des zones de début et de fin de la bande, du ou des seuils de commutation par rapport à la tension de repos du dispositif optoélectronique.

2. Circuit d'arrêt de fin de bande selon la revendication 1, caractérisé en ce que le circuit à valeurs de seuil comporte un commutateur à valeurs de seuil réalisé sous la forme d'un comparateur (3) et que le dispositif à convertisseur numérique/analogique est constitué par un convertisseur numérique/analogique (DAC) (11) qui est relié à l'entrée non inverseuse (9) du comparateur (3) et à l'aide duquel le micro-ordinateur (5) optimise automatiquement l'écart entre le seuil de commutation ($U_1$) et la tension de repos ($U_0$) du dispositif optoélectronique.

3. Circuit d'arrêt de fin de bande selon la revendication 1, caractérisé en ce que le circuit à valeurs de seuil comporte deux commutateurs à valeurs de seuil réalisés sous la forme de comparateurs (3, 4), que le dispositif à convertisseur numérique/analogique est formé par un convertisseur numérique/analogique (DAC) (11) ainsi que par un réseau de résistances (6, 7, 8) et relie l'entrée non inverseuse (9) et l'entrée inverseuse (10) des comparateurs (3) et (4) à la sortie (12) du convertisseur numérique/analogique et à l'aide duquel le micro-ordinateur (5) règle automatiquement la tension de référence ($U_R$) aux bornes du réseau de résistances de manière que les valeurs de seuil ($U_1$) et ($U_2$) soient symétriques par rapport à la tension de repos ($U_0$) du dispositif optoélectronique.

4. Circuit d'arrêt de fin de bande suivant la revendication 1, caractérisé par le fait que le circuit à valeurs de seuil comporte deux commutateurs à valeurs de seuil réalisés sous la forme de comparateurs (3, 4), et que le dispositif à convertisseur numérique/analogique est constitué par un convertisseur numérique/analogique (DAC) (11), dont la sortie (12) est raccordée à l'entrée non inverseuse (9) du premier comparateur (3), par un convertisseur numérique/analogique (DAC) (15), dont la sortie (16) est raccordée à l'entrée inverseuse (10) du second comparateur (4), et que le micro-ordinateur (5) règle, à l'aide des deux convertisseurs numérique/analogique, les seuils de commutation ($U_1$, $U_2$) avec une largeur de fenêtre pouvant être prédéterminée, de manière que ces seuils de commutation soient disposés symétriquement par rapport à la tension de repos ($U_0$) du dispositif optoélectronique.

5. Circuit d'arrêt de fin de bande selon la revendication 1 ou 2, caractérisé en ce que le dispositif optoélectronique possède un optocoupleur (1, 1'), qui embrasse toute la largeur du support d'enregistrement.

6. Circuit d'arrêt de fin de bande selon la revendication 1 ou l'une des revendications 2 à 4, caractérisé en ce que le dispositif optoélectronique comporte deux optocoupleurs (1, 1') et (2, 2') branchés électriquement en série et décalés l'un par rapport à l'autre dans la direction de déplacement de la bande et embrassant tous les deux toute la largeur du support d'enregistrement.

7. Circuit d'arrêt de fin de bande selon la revendication 1, 3 ou 4, caractérisé en ce que le dispositif optoélectronique comporte deux optocoupleurs (1, 1') et (2, 2'), branchés électriquement en série, disposés côte-à-côte perpendiculairement à la direction de déplacement de la bande et dont l'un embrasse la moitié supérieure de toute la largeur de la bande du support d'enregistrement et dont l'autre embrasse la moitié inférieure de toute la largeur de la bande du support d'enregistrement.

8. Circuit d'arrêt de fin de bande selon une ou plusieurs des revendications 1 à 7, caractérisé en ce que l'émetteur et le récepteur du dispositif optoélectronique sont disposés en vis-à-vis l'un de l'autre sur la face avant et sur la face arrière du support d'enregistrement, pour la détection de zones transparentes de début et de fin de la bande.

9. Circuit d'arrêt de fin de bande selon une ou plusieurs des revendications 1 à 7, caractérisé en ce que l'émetteur et le récepteur du dispositif optoélectronique sont disposés du même côté du support d'enregistrement, sous un angle déterminé, pour l'identification de zones réfléchissantes de début et de fin de la bande.

10. Circuit d'arrêt de fin de bande selon une ou plusieurs des revendications 1 à 9, caractérisé en ce que le micro-ordinateur (5) règle les seuils de commutation ($U_1$) et/ou ($U_2$) uniquement lorsque la zone de début ou de fin de bande, qui doit être identifiée optiquement, du support d'enregistrement n'est pas située dans la zone d'émission/réception du dispositif optoélectronique.

11. Circuit d'arrêt de fin de bande selon la revendication 10, caractérisé en ce que le micro-ordinateur (5) déclenche à nouveau l'entraînement de la bande après un arrêt déjà exécuté de la bande, et ce jusqu'à ce que la zone de début ou de fin de bande, qui doit être identifiée optiquement, du support d'enregistrement ne soit plus située dans la zone d'émission/réception du dispositif optoélectronique.

12. Circuit d'arrêt de fin de bande suivant une ou plusieurs des revendications 1 à 11, caractérisé en ce que le micro-ordinateur (5) règle à nouveau les seuils de commutation ($U_1$) et/ou ($U_2$) après chaque insertion d'une bande dans l'appareil d'enregistrement et/ou de lecture et contrôle en permanence ces seuils pendant le déplacement de la bande.

FIG.1

FIG. 2

FIG. 3

FIG. 4

11